# EUROPEAN PATENT APPLICATION

(11) **EP 4 723 058 A1**
(43) Date of publication of application: **08.04.2026**
(21) Application number: 24815938.6
(22) Date of filing: 03.06.2024
(51) Int. Cl.: G06V 20/56, G06V 20/52, H04W 4/40, G06T 5/92, G06T 3/40, H04N 23/741, H04N 23/73

(54) **METHOD FOR DEVICE TO TRANSMIT MESSAGE AND DEVICE THEREFOR IN WIRELESS COMMUNICATION SYSTEM**

(30) Priority: 01.06.2023 KR 20230071041
(71) Applicant: LG Electronics Inc., Yeongdeungpo-gu Seoul 07336 (KR)
(72) Inventor: PARK, Jonghwan, Seoul 06772 (KR); BYUN, Jaihyun, Seoul 06772 (KR); SEO, Hanbyul, Seoul 06772 (KR)
(74) Representative: Mooser, Sebastian Thomas
(86) International application number: PCT/KR2024/007559
(87) International publication number: WO 2024/248564

(57) **Abstract**

Disclosed are a method for a device to transmit a control message and a device therefor in a wireless communication system according to various embodiments. The method comprises the steps of: acquiring object recognition information from an artificial neural network-based object recognition model for recognizing and classifying objects in images of an image acquisition device: transmitting an object message to a peripheral device on the basis of object information recognized from the images included in the object recognition information; and determining whether to transmit the control message for controlling the image acquisition device, the determination being made on the basis of an object recognition ratio for the images included in the object recognition information.

## Description

### TECHNICAL FIELD

The present disclosure relates to a method for transmitting a control message for controlling an image acquisition device by a device in a wireless communication system, and a device therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

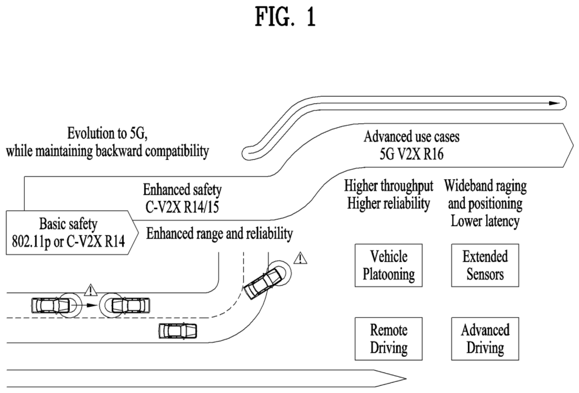

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

An object of the present disclosure is to provide a method for transmitting and receiving a message for recognizing an object more accurately and more efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

According to an aspect, a method for transmitting a control message by a device in a wireless communication system may include acquiring object recognition information from an artificial neural network-based object recognition model that recognizes and classifies an object from an image of an image acquisition device, transmitting an object message to a neighboring device based on object information recognized from the image, which is included in the object recognition information, and determining whether to transmit the control message for controlling the image acquisition device, based on an object recognition rate for the image, which is included in the object recognition information.

Alternatively, based on the object recognition rate being less than a preset threshold, the control message may be transmitted.

Alternatively, the object recognition information may further include factor information about a cause for the object recognition model failing to classify at least one object from the image, and the control message may include at least one control parameter determined based on the factor information.

Alternatively, the factor information may include information about at least one of object classification failure due to an illumination state, object classification failure due to an object density, object classification failure due to an object size, or object classification failure due to a moving speed of an object.

Alternatively, based on the object recognition information further including unclassified object information about an object having mobility less than a specific threshold, the control message may be transmitted even if the object recognition rate is greater than or equal to the preset threshold.

Alternatively, the control message may include a control parameter specifying a partial area to which the object corresponding to the unclassified object information belongs in the image.

Alternatively, based on a difference between pixel values of acquired images, the image acquisition device may not transmit at least one of the images to the object recognition model.

Alternatively, the object recognition rate may be calculated based on a value obtained by dividing the number of objects whose types are classified among objects recognized by the object recognition module from the image by the number of the recognized objects.

According to another aspect, a device for performing the above method for transmitting a control message may be provided.

According to another aspect, a processing device for controlling a device that performs the above method for transmitting a control message may be provided.

According to another aspect, a method for receiving a control message by an image acquisition device in a wireless communication system may include acquiring an image of a specific geographic area, transmitting the image to an artificial neural network-based object recognition model trained to recognize an object from the image, and receiving, from a first device, a control message including at least one control parameter instructing a change in a parameter associated with the acquisition of the image. Based on an object recognition rate included in object recognition information of the object recognition model being less than a preset threshold, the control message may be received from the first device.

According to another aspect, a non-transitory computer-readable recording medium recording having recorded thereon instructions for performing the above method for receiving a control message may be provided.

According to another aspect, an image acquisition device for performing the above method for receiving a control message may be provided.

According to another aspect, a processing device for controlling an image acquisition device that performs the above method for receiving a control message may be provided.

### ADVANTAGEOUS EFFECTS

According to an embodiment of the present disclosure, object recognition may be performed more accurately and more efficiently through message transmission and reception in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram illustrating an architecture for processing and acquiring an adaptive sensing image.
FIGS. 17 to 19 are diagrams illustrating a method for controlling an image capturing module or an image post-processing module by a configuration manager module.
FIG. 20 is a diagram illustrating a method for transmitting a control message for controlling an image acquisition device by a device.
FIG. 21 is a diagram illustrating a method for receiving a control message from a device by an image acquisition device.
FIG. 22 illustrates a communication system applied to the present disclosure.
FIG. 23 illustrates wireless devices applicable to the present disclosure.
FIG. 24 illustrates another example of a wireless device to which the present disclosure is applied.
FIG. 25 illustrates a vehicle or an autonomous driving vehicle applied to the present disclosure.
FIG. 26 illustrates an example of an AI device applicable to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

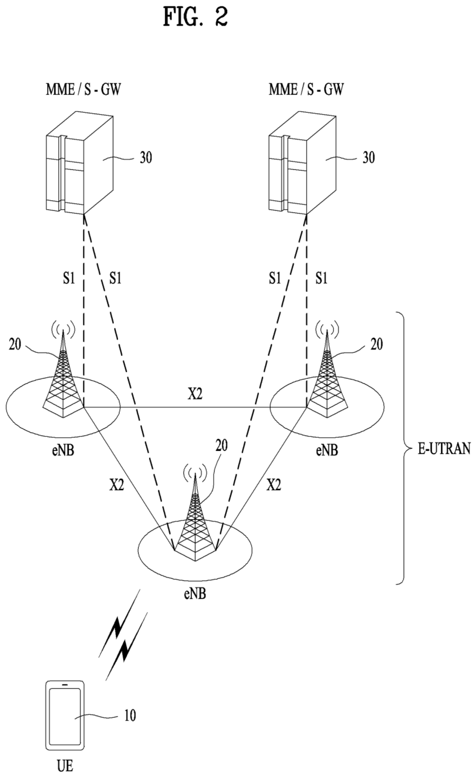

For clarity of explanation, LTE-A or 5G NR is mainly described, but the technical spirit of the embodiment(s) is not limited thereto
FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

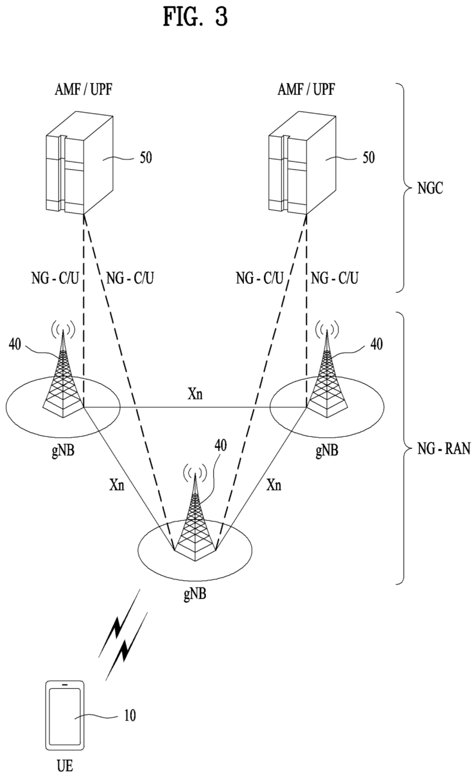

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

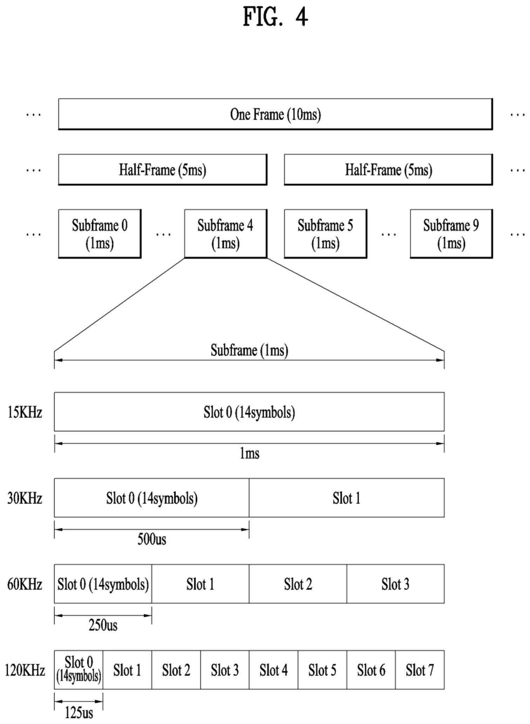

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) | |
|---|---|---|---|
| FR1 | 410 MHz - 7125 MHz | 15, 30, 60 kHz | |
| FR2 | 24250 MHz - 52600 MHz | 60, 120, 240 kHz | |

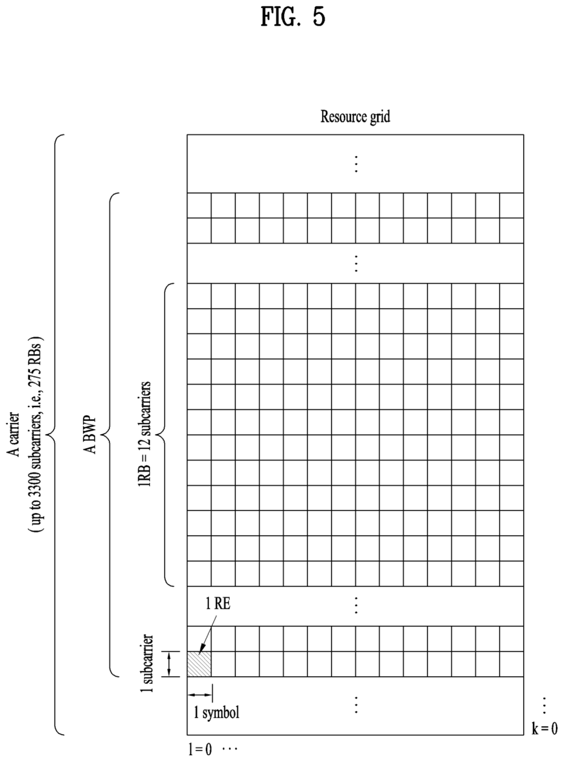

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

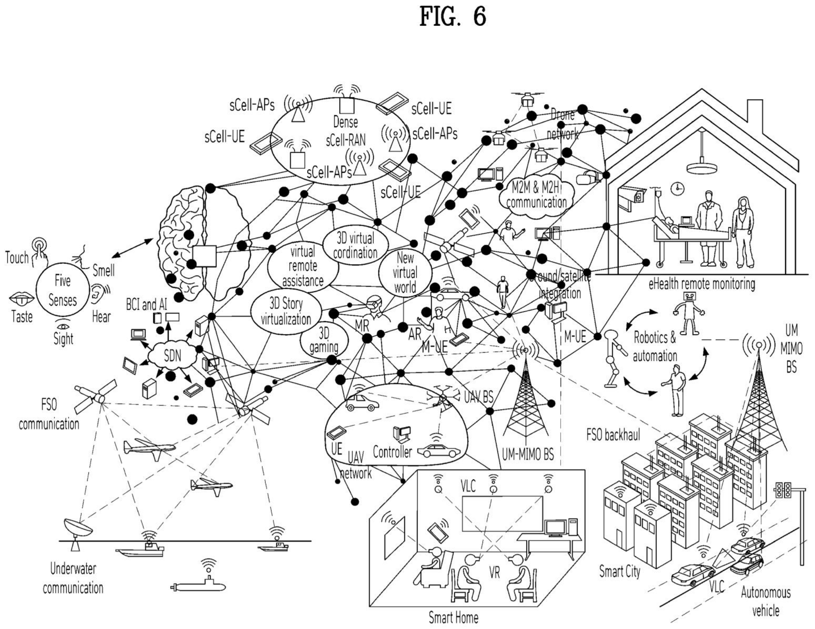

FIG. 6 shows a communication structure providable in a 6G system, based on an embodiment of the present disclosure. The embodiment of FIG. 6 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". Al may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.
- Artificial Intelligence (Al): When Al is introduced to communication, real-time data transmission may be simplified and improved. Al may determine a method of performing complicated target tasks using countless analysis. That is, Al may increase efficiency and reduce processing delay. Operation consuming time such as handover, network selection, and resource scheduling immediately performed by using Al. Al may also play an important role in M2M, machine-to-human, and human-to-machine. In addition, Al may be a prompt communication in brain computer interface (BCI). An Al based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves, which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

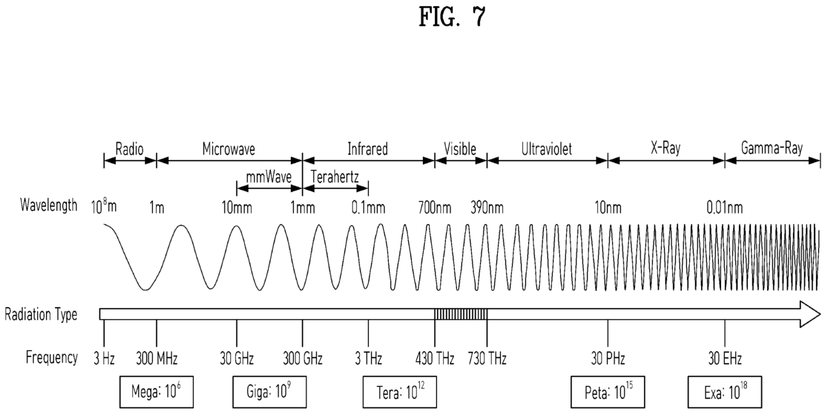

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

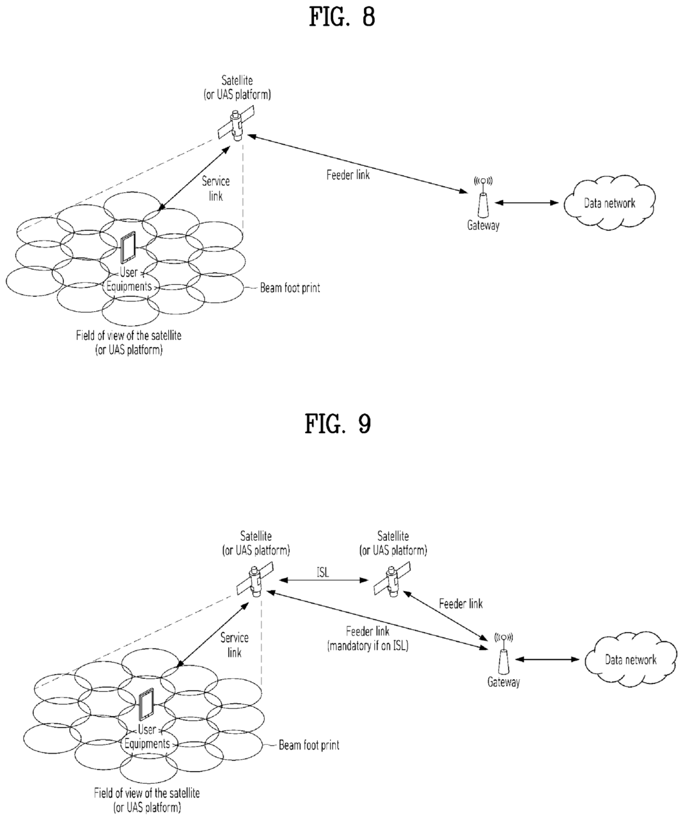

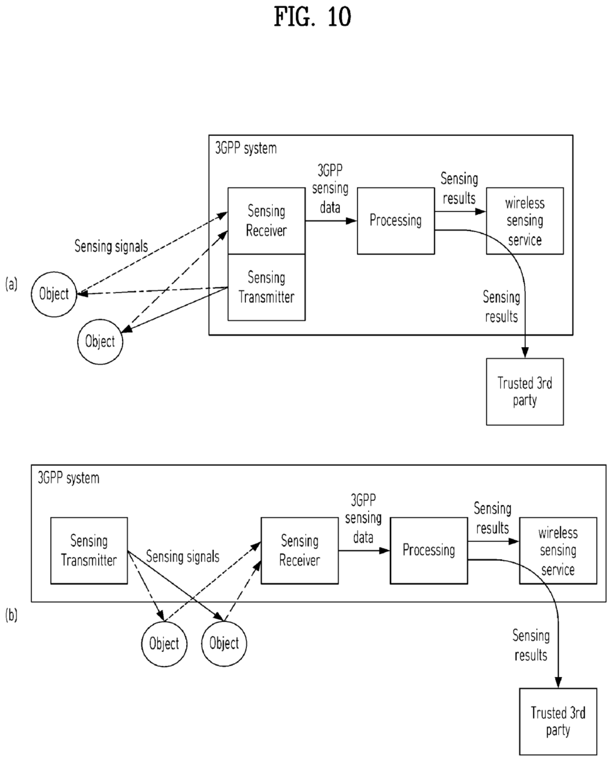

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

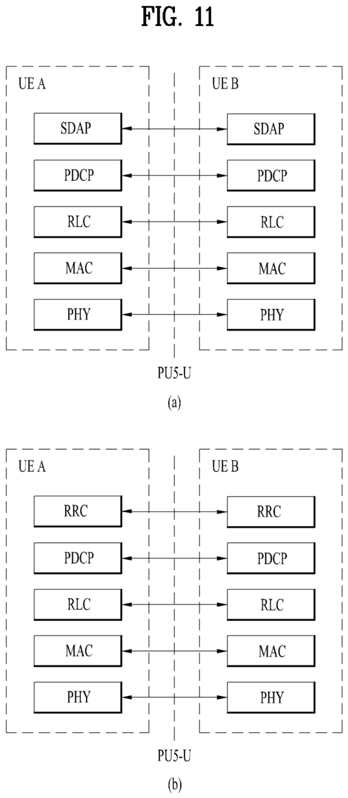

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

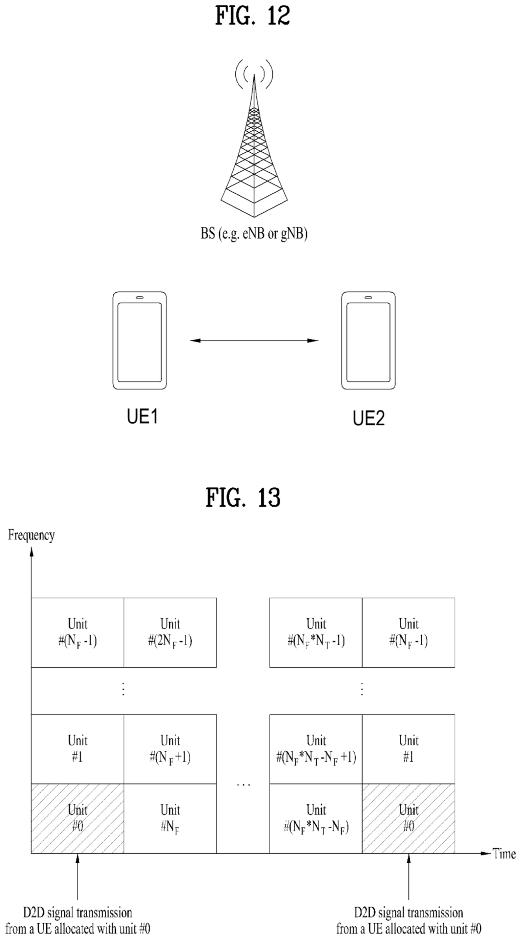

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

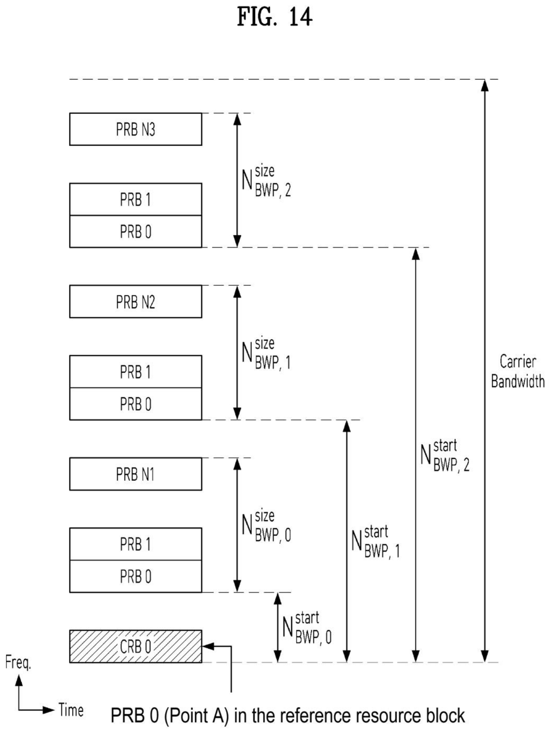

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start} _{BWP} from the point A, and a bandwidth N^{size} _{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

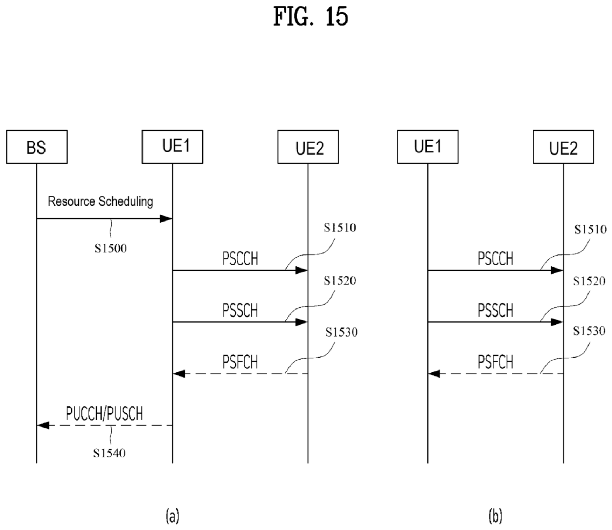

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

### Method for acquitting and processing adaptive sensing image data in VX service

V2X services play a major role in securing safety including collision prevention, and controlling an efficient traffic flow by allowing road users (vehicles, RSUs, pedestrians, and so on) to transmit their status information (positions, speeds, sizes, and so on) or environmental information (a map, signal information, and so on) to nearby road users through communication. Currently, there are various V2X services using multiple communication schemes (short range communication and long range communication), and service level requirements are defined for an organic operation of V2X services involving multiple ITS-stations.

Among these service structures, a roadside unit (RSU)-based infrastructure service may assist in traffic safety by detecting and predicting collisions through generation, transmission, and relaying of ITS messages between vulnerable road users (VRUs) and vehicles. An RSU may adopt an AI function to perform a camera-based solution, thereby improving the quality of object detection and predicting collisions. Further, the RSU may detect the positions of VRUs or objects unconnected (via PC5 or Uu links) with relatively high accuracy. A connection to an RSU-based network is in the structure of camera (or image capturing module)-AI sensor (AI sensing module)-analyzer (sensing data analysis module)-message generator (message generation module), and multi-access edge computing (MEC) or a cloud may be appropriately used depending on the processing complexity of object recognition.

Object recognition is a technology of automatically detecting and recognizing specific objects in a digital image, which is one of the computer vision technologies. The object recognition technology usable in a typical ITS is a deep learning-based object recognition technology (e.g., DNN or You Only Look Once (YOLO)), in which an image is input into an artificial neural network model, features are extracted from the image, and object recognition and classification are performed based on the extracted features of the image. The deep learning-based object recognition technology may include object detection technology in which an object is detected from an input image, and object classification technology in which the detected object is classified. The two technologies may also be processed together as a single logical unit. Each technology is described below in detail.
- An image is input to an artificial neural network model (trained to detect an object from the image) -> the artificial neural network model extracts features from the input image -> the artificial neural network model uses the extracted features to generate a bounding box in an area of the image that are highly likely to contain an object -> an extracted image is input to an artificial neural network model (trained to classify the type of an object) -> the type of the detected object is predicted by classifying the input image.

For example, YOLO is a deep learning-based model for object detection, which may predict the location and class of an object in real time by processing an image in a single forward propagation. Specifically, YOLO may detect an object by dividing an input image into a plurality of grids and predicting multiple bounding boxes and class probabilities in each grid cell.

These various object recognition technologies may play an important role in recognizing objects included in an ITS and supporting V2X services. Further, an object recognition technology with a speed and accuracy enabling real-time processing may be important in the fields of V2X, ITS, and autonomous driving.

The afore-described conventional object recognition technologies/algorithms may cause the following object recognition errors. For example, the following errors may occur due to the characteristics of an image acquisition device, such as a camera that acquires an image.
- ① Small object recognition error: An object recognition algorithm generally has high recognition performance for large objects, but a high possibility of recognition errors for small objects. For example, a recognition rate for small objects may vary depending on the altitude or height of the camera acquiring an image.
- ② Inappropriate brightness or contrast: The brightness or contrast of an object may change depending on a lighting condition or the environment of a shooting location. In this case, the object recognition rate based on the object recognition algorithm may be significantly degraded. For example, when a road is dark in the early morning, the object recognition rate may be significantly degraded.
- ③ Distorted image recognition error: Distortion or deformation may occur in an image due to the moving speed of an object or weather conditions such as fog. In this case, the object recognition rate based on the object recognition algorithm may be significantly degraded. For example, an image of an object moving at a high speed may experience blur distortion due to an insufficient shutter speed of the image acquisition device or inconsistency between a shutter timing and a speed. This distortion may significantly reduce the object recognition rate in the image.

For object recognition algorithms, there are image enhancement algorithms that consider related problems, but they are not the core technology of object recognition. Moreover, although a correction function in the image acquisition device (e.g., CCTV or camera) itself may be used, such correction may be a correction to match the linear correction of the image acquisition device itself, not a correction that reflects a road situation. Such an enhancement algorithm technology may operate independently without direct linkage to the object recognition technology of the object recognition algorithm. Further, current CCTVs as image acquisition devices are inefficient because they use continuous computing power with static settings without optimization, and may not be directly used for improving the object recognition rate.

To solve these problems, it is necessary to acquire an image with characteristics optimized for a road situation/environment by directly controlling an image acquisition device based on output information/object recognition information of an artificial intelligence (AI) sensor/AI-based object recognition model. Accordingly, the object recognition rate in the AI sensor/model may be significantly improved by inputting an image with characteristics optimized for a road situation to the AI sensor/model.

To this end, the proposed disclosure allows an RSU to generate a configuration parameter for image correction and/or control of an image acquisition device based on specific trigger conditions, and to operate internally in a restful manner according to a connected interface structure or to generate a message through an external MEC or cloud and transmit it to reference architecture connection structure(s). In addition, the proposed disclosure may acquire and process an adaptive image by reflecting image processing requirements included in configuration/control parameters or a generated message through creation of the new modules of a video capturing module, a post-processing module, and a configuration manager module of the reference architecture. In this case, the proposed disclosure may control the image acquisition device through the configuration parameters to acquire an image suitable for a road environment/road situation, significantly improve the object recognition rate by inputting the acquired image to the AI sensor/AI model, and skip/minimize an additional correction/filtering operation for the image, since it acquires the image itself optimized for object recognition. Therefore, the computing power consumption for object recognition may be significantly reduced.

A detailed description will be given below of a method for generating a configuration parameter for image correction and/or control of an image acquisition device based on output information of an AI-based object recognition model by a device such as an RSU, and a method for controlling the image acquisition device based on this.

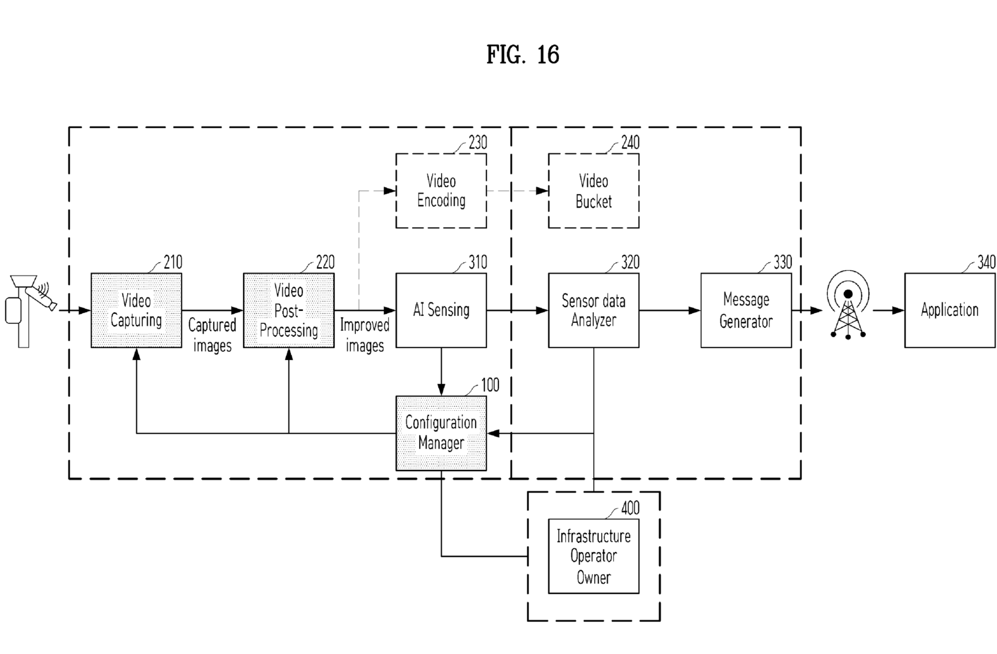

FIG. 16 is a diagram illustrating an architecture for processing and acquiring an adaptive sensing image.

Referring to FIG. 16, the reference architecture may include an AI sensing module 310, a sensor data analyzer module 320, a message generator module 330, an application module 340, and an infrastructure operator module 400. The AI sensing module 310 may include a trained AI-based object recognition model (or AI model) for object recognition/object classification. In addition, the reference architecture may further include newly proposed modules: an image capturing module 210, an image post-processing module 220, and an image configuration manager module 100.

The newly proposed image capturing module 210, image post-processing module 220, and configuration manager module 100 may operate based on the satisfaction of at least one of the following trigger conditions.
- ① When the confidence level of an object recognition algorithm or the comprehensive judgment value of a significant reference metric is less than a preset threshold. For example, the confidence level of the algorithm or the significant reference metric may be a recognition accuracy, a recognition precision, a recall, an F1 score (harmonic mean of the precision and the recall), and so on. For example, the recognition accuracy may be the number of objects (correctly) recognized by the AI model from an image / the total number of objects (the number of recognizable objects). For example, when the AI model recognizes/detects 10 objects from an image, classifies 8 of the 10 objects, and fails to classify 2 objects, the accuracy of the AI model may be calculated as 8/10 * 100 = 80%.
- ② When an active configuration parameter input or a related message is provided according to a road environment. For example, the active configuration parameter input may be provided, when conditions such as traffic congestion (determined by vehicle speeds), road conditions based on time of day (e.g., rush hour), and operation of variable signals (e.g., traffic lights turning on in the evening) represent a specific road state/road environment. For example, when the aforementioned situations are detected, the sensor data analyzer module 320 and/or the infrastructure operator module 400 may transmit/input the aforementioned active configuration parameter or a message including related information to the configuration manager module 100. In this case, the configuration manager module 100 may perform an operation for controlling the image capturing module 210/the image post-processing module 220 based on the message.
- ③ When a specific input for efficient computing usage is provided from the AI sensing module 310 (to the configuration manager module).
- ④ When object recognition is difficult due to a high RSU or CCTV location.
- ⑤ When the generation of a control parameter is instructed by the infrastructure operator module.
- (6) When the application of a control parameter is required due to the detection of a specific event such as a special accident or weather condition.

When at least one of the above triggering conditions is satisfied, the configuration manager module 100 may generate a control parameter for controlling the image capturing module 210 or a message including the control parameter. The configuration manager module 100 may provide the generated control parameter to the image capturing module 210/the image post-processing module 220 to adjust/control parameters related to image acquisition or to adjust parameters related to the performance of post-processing on the image. In this way, the configuration manager module 100 may control image characteristics acquired from the image capturing module 210/the image post-processing module 220 to be suitable for the road situation.

Each of the above-described modules will be described in detail. Each module is separated for the purpose of logical distinction, and the functions/operations described below may be implemented as a function at the RSU level, MEC level, or cloud level.

### (1) Image Capturing Module

The image capturing module 210 may be an image acquisition device (a camera or a CCTV). The image capturing module 210 may acquire/capture raw data for an image that has undergone a general optical electronic transfer function (OETF) and transmit the captured/acquired raw data for the image to the image post-processing module 220/AI sensing module 230/image encoding module 230. The OETF may be a transfer function defined to convert an optical input signal into an electrical output signal in an image/video system. More specifically, the OETF may be a transfer function used to convert an original image acquired by a camera sensor into a digital format image in an image/video system.

The image capturing module 210 may adjust/change the transfer function related to the OETF based on a control parameter received from the configuration manager module 100. For example, the image capturing module 210 may perform transformation to the transfer function of the OETF according to the control parameter received from the configuration manager module 100 to adjust/control the transformation weight/ratio of an electrical output signal for an optical input signal.

Alternatively, the image capturing module 210 may change the capture attributes of an original image by adjusting a contrast ratio based on the control parameter received from the configuration manager module 100. Alternatively, the image capturing module 210 may adaptively change an image resolution, a frame rate, and/or a brightness based on the control parameter received from the configuration manager module 100 according to a road situation/environment.

### (2) AI Sensing Module

The AI sensing module 230 may include an object recognition model trained to recognize an object from an image and classify the recognized object. For example, the AI sensing module 230 may perform object detection and object classification by an image object recognition technology. Object recognition may be an operation of extracting features from an input image (based on a CNN or the like) and then specifying/masking an area where the object is recognized as a bounding box by an AI model, which is an artificial neural network model. Object classification may be an operation of predicting which object the recognized object is, based on the features of an image inside the bounding box. For example, the AI sensing module 230 may be pre-trained to recognize objects (pedestrians, bicycles, motorcycles, vehicles, and so on) related to V2X services. For example, the AI sensing module 230 may generate/predict object information (speed, direction of travel, travel path, object shape, object size, and so on) for a recognized object. The AI sensing module 230 may output object recognition information, which is output information including recognized/classified object information.

The AI sensing module 230 may transmit a prediction result or output data for an object significant for V2X services (i.e., an object for which object information needs to be generated for a surrounding environment in relation to V2X services, such as a pedestrian, a bicycle, a motorcycle, a vehicle, or the like) among detected objects, to the sensor data analyzer module 320. Alternatively, the AI sensing module 230 may calculate an accuracy (or object recognition rate), which is a value obtained by dividing the number of correctly recognized objects (or the number of classified objects) by the total number of recognized objects (or the total number of recognized/detected objects), as described above. The calculated object recognition rate/accuracy may be used for evaluating the performance of the object recognition/classification algorithm of the AI sensing module 230. Meanwhile, the AI sensing module 230 may calculate the accuracy for categories such as path prediction and risk detection, in addition to object recognition/classification.

The AI sensing module 230 may transmit an output result including object information about the recognized objects and/or information about the object recognition rate to the configuration manager module 100 and/or the sensor data analyzer module 320.

### (3) Sensor Data Analyzer Module

The sensor data analyzer module 320 may determine whether to generate an object message including object information resulting from the detection/recognition of objects related to V2X services, based on the output information/output data of the AI sensing module 230. When determining to generate the object message, the sensor data analyzer module 320 may provide information about parameters related to the generation of the message and the object information to the message generator module.

### (4) Message Generator Module

The message generator module 330 may generate a message for V2X or ITS based on the parameters and the object information transmitted from the sensor data analyzer module 320.

### (5) Application Module

The Application Module 340 may decode the message received from the message generator module 330 and provide the object information included in the message to a user.

### (6) Configuration Manager Module

The configuration manager module 100 may determine whether to generate at least one control parameter for controlling the image capturing module 210 and/or the image post-processing module 220, based on the output information/output data (e.g., object recognition information) received from the AI sensing module 230 and/or the sensor data analyzer module 320. The configuration manager module 100 may transmit the generated at least one control parameter to the image capturing module 210 or the image post-processing module 220.

For example, when the accuracy or object recognition rate included in the output information/output data is less than a preset threshold, the generation of at least one control parameter for controlling the image capturing module 210 and/or the image post-processing module 220 may be triggered. For example, the object recognition information may further include cause information regarding the failure factor of object recognition and/or object classification. The cause information may include information about the failure factor of object classification due to blurring caused by an object speed, a low resolution of the image compared to an object size, an increase in an object density, a lighting condition, and an increase in noise due to weather deterioration such as snow/rain. In this case, the configuration manager module 100 may determine at least one control parameter to be controlled based on the failure factor of object recognition included in the cause information.

For example, when the failure factor is blurring, the configuration manager module 100 may generate a control parameter that increases a frame rate or a shutter speed to eliminate the blurring phenomenon. Alternatively, the configuration manager module 100 may generate a control parameter that divides the image into a predetermined number of ROIs or increases a resolution in response to object recognition failure caused by an object density. Alternatively, the configuration manager module 100 may generate at least one control parameter for adjusting a tone mapping function/contrast ratio/OETF so that more bit values may be allocated to a dark area, in order to resolve the object recognition failure factor caused by the degradation of the lighting condition (brightness). The configuration manager module 100 may transmit a control message including the generated at least one control parameter to the image capturing module 210 and/or the image post-processing module 220, thereby controlling the image capturing module 210 and/or the image post-processing module 220 to acquire an image where the failure factor of object recognition has been resolved. In this case, the configuration manager module 100 may effectively improve the object recognition rate of the AI sensing module 230 by changing the image characteristics through the control parameter to be suitable for the road situation.

Alternatively, the configuration manager module 100 may collect various pieces of road environment information (a road traffic condition, weather, time information, and so on) received from the infrastructure operator module 400, and control the image capturing module 210 and/or the image post-processing module 220 to acquire an image that may improve the object recognition rate, based on the collected road environment information. Alternatively, when the configuration manager module 100 receives information about a specific road situation/road environment from the infrastructure operator module 400, it may generate at least one control parameter corresponding to the specific road situation/road environment, and control the image capturing module 210 and/or the image post-processing module 220 based on the generated at least one control parameter.

### (7) Image Post-Processing Module

The image post-processing module 220 may perform additional correction on the image whose characteristics have been adaptively controlled according to the road environment, based on the control parameter transmitted from the configuration manager module 100. The image post-processing module 220 may provide the image data corrected to be optimized for object recognition to the AI sensing module 230. For example, when the at least one control parameter is received, the image post-processing module 220 may correct the image/image data transmitted from the image capturing module 210 based on the at least one control parameter so that a specific area where objects on the road are moving is clearly visible, or perform tone mapping processing to adjust the contrast of an area where bounding boxes frequently appear in the image data.

Alternatively, when an image change between frames is equal to or less than a specific level based on a differential image between a previous frame and a current frame, the image post-processing module 220 may drop the current frame from a buffer and not transmit it to the AI sensing module 230. In this case, computing resources and load associated with AI sensing may be significantly reduced.

Alternatively, in the proposed disclosure, the configuration manager module 100 may transmit the generated control parameter to other modules (the video post-processing Module or the image capturing module 210) in a restful manner, or transmit the control parameter in a message with a specific periodicity.

Alternatively, the configuration manager module 100 may generate a control parameter/message for controlling the image capturing module 210 and/or the image post-processing module 220, based on parameters defined as in Table 5. The message may be based on a message frame of the Society of Automotive Engineers (SAE) and/or European Telecommunications Standards Institute (ETSI).

**[Table 5]**

| Element | | Type | remark |
|---|---|---|---|
| @messageID | | int | New message ID defined in SAE /ETSI |
| ...<sequence> | | | |
| @minimumWidth | | Unsigned int | Minimum resolution width |
| @minimumHeight | | Unsigned int | Minimum resolution Height |
| @toneMapping | | Unsigned int | Predefined tone mapping function type |
| @transferCharacteristic | | Unsigned int | OETF function type |
| @minimumFrameRate | | Unsigned int | Recommended minimum frame rate |
| @contrast | | float or int | Contrast adjustment ratio (0~100%) |

| @brightness | | float or int | Contrast adjustment ratio (0~100%) |
|---|---|---|---|
| @divisionROI | | Unsigned int | Division count |
| <sequence> | @id | Unsigned int | id mapping from top-left to right determine <sequence> by number of divisionROI |
| | @startWidth | Unsigned int | |
| | @startHeight | Unsigned int | |
| | @endWidth | Unsigned int | |
| | @endHeight | Unsigned int | |
| | @toneMapping | Unsigned int | |
| | @contrast | float or int | |
| | @brightness | float or int | |

@minimumWidth and @minimumHeight are parameters defined for adjusting the resolution of the image capturing module (or the image acquisition device such as a camera or a CCTV) and/or the image post-processing module. The values of @minimumWidth and @minimumHeight may be determined based on the size of an object in the image. @minimumFrameRate is a parameter for adjusting the capturing frame rate of the image, and its value may be determined based on the density of objects or the moving speeds of the objects. @contrast is a parameter that adjusts the contrast of the captured image and may be in units of %. For example, when a contrast reduction of about 0.05 is required, the value of @contrast may be set to -0.05 or 5%.

@divisionROI may be a parameter for controlling the number of image divisions. The value of @divisionROI may be determined based on the density of objects in the image, the location/number of unclassified objects, and the like. For example, when the value of @divisionROI is 4, the image acquisition device/image capturing module may divide the captured/acquired image into four ROIs. Herein, the image division may not necessarily be into equal proportions, and the image characteristics may be additionally considered to divide the image into ROIs with appropriate proportions.

The sizes of objects in the acquired image may be relatively small due to the height of an RSU, and the object recognition rate based on the image may be degraded. Considering this, @divisionROI may also be used as a parameter for the additional magnification of the divided ROIs. The ID of each divided ROI may be defined in the top left-to-right direction.

@toneMapping may be a parameter for controlling RGB or YUV (luminance, chrominance, and chrominance) values in the captured image. Based on @toneMapping, the number of bits allocated/mapped to a low-level area or a high-level area may be controlled. For example, more bits may be allocated to a specific low-level area of the image by applying a gamma function. In this case, a dark part in the image may be expressed more clearly. For example, as defined in Table 6, the value of @toneMapping and a corresponding mapping function may be predefined, and the configuration manager module 100 may determine an indication value for the tone mapping function to be indicated via the control parameter, based on Table 6.

@transferCharacteristic may be a parameter for a transfer function, which is OETF information that converts a light/optical signal into an electrical signal. @transferCharacteristic may be defined as illustrated in Table 7. For example, when the camera/image acquisition device captures an image with a brightness supporting high dynamic range (HDR), the camera/image acquisition device may input a representation range into a specific function indicated by @transferCharacteristic to obtain an appropriate RGB output.

**[Table 6]**

| @toneMapping | Value | |
|---|---|---|
| Linear (Regular) function | 0x01 | Linear function |
| Low tone based function | 0x02 | Tone mapping function applied by allocating more total bits to dark area |
| Middle tone based function | 0x03 | Tone mapping function applied by allocating more total bits to middle-brightness area |
| High tone based function | 0x04 | Tone mapping function applied by allocating more total bits to high-brightness area |
| Customized | 0x05 | Administrator-defined customized function |
| Reversed | | |

**[Table 7]**

| @transferCharacteristic | Value | |
|---|---|---|
| Gamma function | 0x01 | Linear function |
| PQ function | 0x02 | Tone mapping function applied by allocating more total bits to dark area |
| Customized | 0x03 | Administrator-defined customized function |
| Reversed | | |

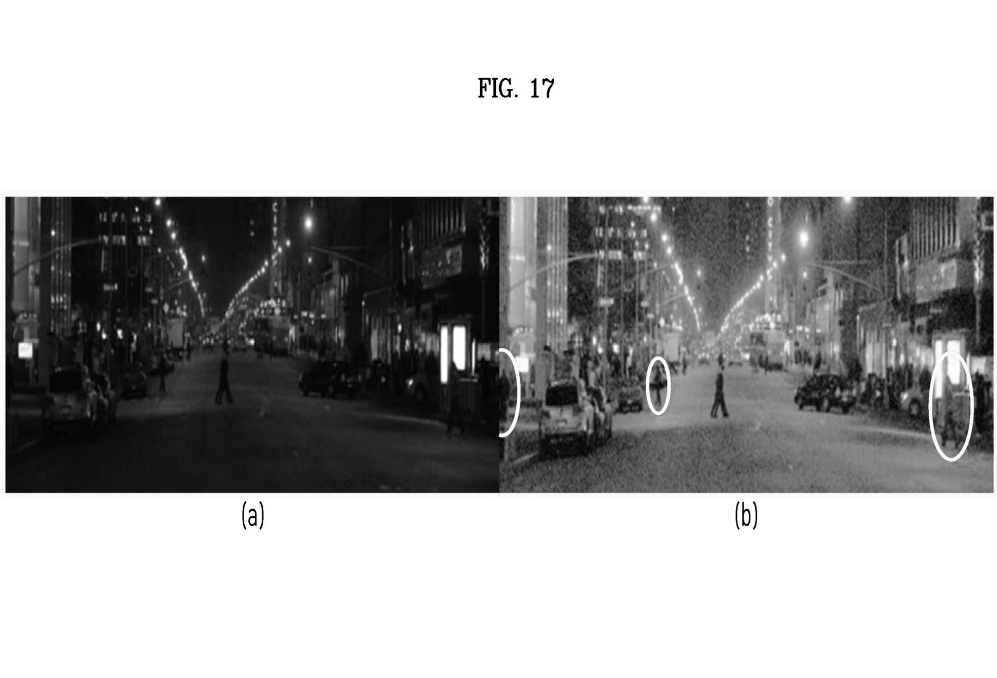

FIGS. 17 to 19 are diagrams illustrating a method for controlling the image capturing module or the image post-processing module by the configuration manager module.

Referring to FIG. 17(a), a traffic volume on a dark road may be low in the early morning, which may lead to an increase in driving speeds. In this case, object recognition may be difficult in an image due to dark lighting and/or high driving speeds. Further, since the traffic volume is low and the AI sensing module performs object recognition/detection even on an image with a small difference value from a previous frame (i.e., an image almost identical to the previous frame), the object recognition/detection may be inefficient.

In this case, when an object recognition rate included in an output result/output data of the AI sensing module is less than a specific threshold and cause information related to dark lighting is included, the configuration manager module may generate control parameters for controlling a contrast and a tone mapping function and provide the generated control parameters to the image capturing module. For example, FIG. 17(a) illustrates an image acquired by the image capturing module in an environment where object recognition is difficult due to lack of illumination, and FIG. 17(b) illustrates an image acquired from the image capturing module controlled by the aforementioned control parameters. Object recognition may be difficult in the image of FIG. 17(a) using general image capturing and image processing methods. In contrast, referring to FIG. 17(b), the image capturing module may acquire an image with characteristics where a dark part is more clear by controlling a contrast and a tone mapping function based on a lighting environment. In this case, relatively accurate object recognition may be guaranteed even with general image capturing and image processing methods in the AI sensing module. Compared to using a conventional algorithm that only performs correction on an image that has already been acquired, a higher object recognition rate for the AI sensing module may be ensured by directly controlling the characteristics of an image acquired by the image capturing module to match a road situation/environment in this way.

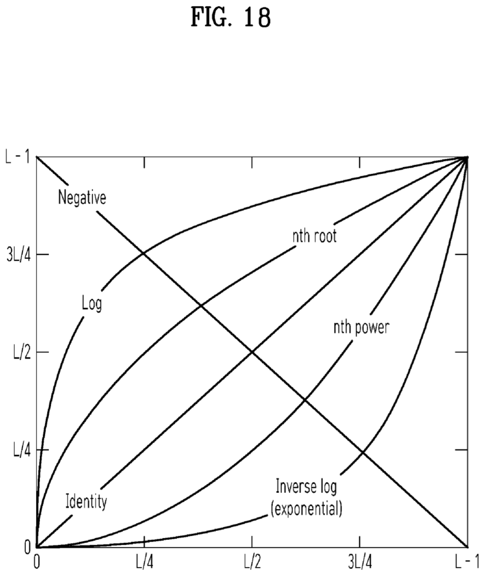

Alternatively, referring to FIG. 18, the configuration manager module may significantly increase an object recognition rate degraded by a dark environment by generating a control parameter based on a tone mapping function. For example, as illustrated in FIG. 18, various tone mapping functions f(x) may be defined in the relationship of an input x and an output y. For example, when the tone mapping function is a log-based function, more image bits are allocated to an area corresponding to a low level than an area corresponding to a high level, which may increase a (pixel) representation range for the low-level area. Alternatively, the configuration manager module may also control the image capturing module by additionally generating a control parameter that adjusts/controls an appropriate contrast ratio for a dark environment. In this case, an image facilitating object recognition may be acquired, as illustrated in FIG. 17(b).

Further, in the early morning when traffic is low, the driving speeds of objects (e.g., vehicles) may be higher than in the daytime. In this case, blurring may occur in an image acquired by the image capturing module. Therefore, the configuration manager module may generate a control parameter for controlling a frame rate (fps) and a shutter speed to eliminate the blurring phenomenon in the image acquired by the image capturing module. For example, an image acquisition device supporting 30fps may acquire an image of an object moving at a speed of 100km/h or more (i.e., 27.78m/s or more) at an intersection. When the frame rate of the image capturing module is 30fps, it may capture/acquire 1 frame every 1/30 seconds (in which case, the travel distance of an object between frames is 0.926m), and blurring may occur. Therefore, the configuration manager module may provide a control parameter for adjusting the frame rate (fps) to 60fps to the image capturing module, thereby reducing an acquisition interval of 1 frame to 1/60 seconds (or the travel distance of an object between frames to 0.463m) and thus minimizing the blurring phenomenon in the image.

Alternatively, the AI sensing module may recognize/detect objects in real time from all input acquired/captured images. However, because the amount of a change (i.e., the difference between pixel values) between frames is minimal in the early morning when vehicle traffic is low, performing object recognition/detection on all images in real time may be inefficient. Therefore, the image post-processing module or the image capturing module may transmit only at least of a plurality of frames to the AI sensing module based on the amount of the change between frames. For example, when the difference value between the current frame and the immediately preceding frame is the same or less than a specific threshold difference, the image post-processing module or the image capturing module may drop a current frame and not transmit it to the AI sensing module.

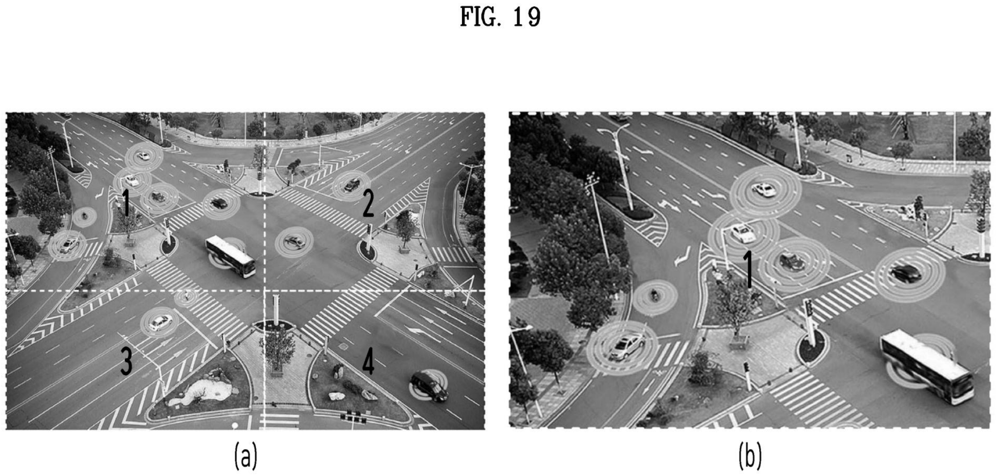

Alternatively, referring to FIG. 19, small objects or unclassified obstacles may be detected/recognized on a road. For example, when a sinkhole or obstacle with a similar color to that of the road is detected/recognized on the road (or when detection/recognition information about a sinkhole or obstacle is received from the AI sensing module), the configuration manager module may generate a control parameter for changing a capturing/image resolution to be equal to or greater than a specific level and a control parameter for magnifying a specific ROI in the image. The specific ROI may be indicated/specified by parameters @startWidth, @startHeight, @endWidth, and @endHeight. The configuration manager module may transmit the generated control parameters to the image capturing module and/or the image post-processing module. In this case, the image capturing module and/or the image post-processing module may transmit/input the image with the specific ROI magnified in the image with a resolution at or above the specific level based on the control parameters, to the AI sensing module. In this case, the AI sensing module may improve the object recognition rate by performing additional learning on obstacles not classified as objects, based on the image with the magnified specific ROI.

Further, an RSU or CCTV located at a high position may have a reduced object recognition rate due to the height. In this case, when the object recognition rate drops, the configuration manager module may apply a process of specifying a specific ROI and sensing the area. For example, an embodiment may be provided in which ROIs where a road and VRUs exist as analysis areas, excluding areas that do not require recognition, and only the specific areas are simultaneously input to and recognized by the AI sensing module.

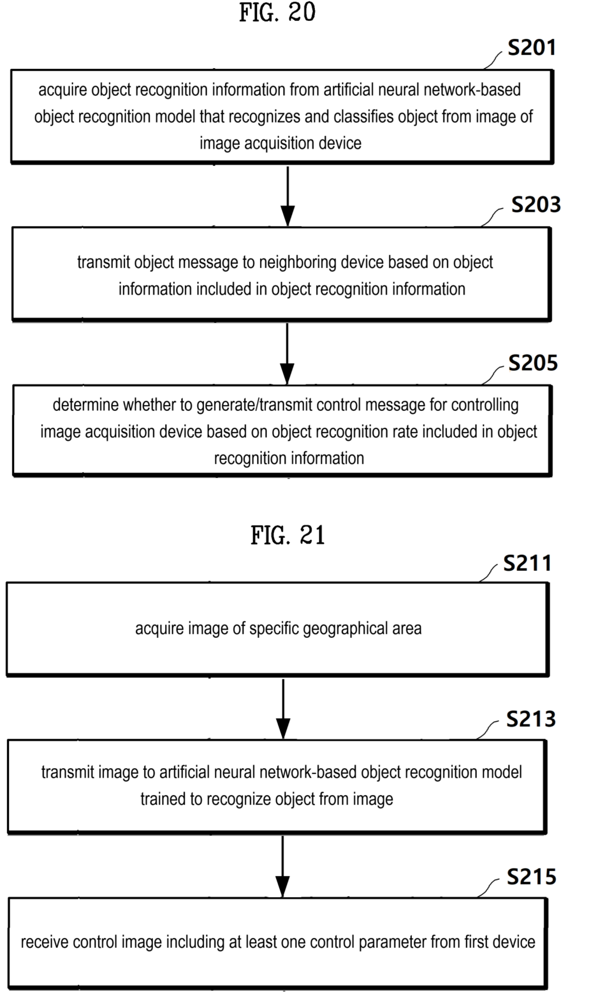

FIG. 20 is a diagram illustrating a method for transmitting a control message for controlling an image acquisition device by a device.

Referring to FIG. 20, the device may acquire object recognition information from an artificial neural network-based object recognition model that recognizes an object from an image of the image acquisition device (S201).

For example, the image acquisition device may acquire an image of a predetermined geographical area and transmit it to the object recognition model. The object recognition model may extract features from the image, recognize an object present in the geographical area based on the extracted features, and perform a classification operation for the recognized object. The device may receive object recognition information for the object recognized in the image from the object recognition model. The image acquisition device may be a CCTV or a camera, including the image capturing module and/or the image post-processing module described with reference to FIGS. 16 to 19. The object recognition model may be an AI model included in the AI sensing module described with reference to FIGS. 16 to 19. The device may include the configuration manager module described with reference to FIGS. 16 to 19. Alternatively, the device may include at least one of the sensing data analyzer module and the message generator module, in addition to the configuration manager module. For example, the device may be an RSU including the configuration manager module, the sensing data analyzer module, and the message generator module.

The object recognition information may include information (a location, a size, a shape, mobility information, and so on) about the object recognized/detected in the image and/or the accuracy/confidence level (hereinafter, an object recognition rate) of the image. The object recognition rate may be calculated by the object recognition model based on the number of objects recognized/detected in the image and the number of classified objects, as described above. Alternatively, the device may directly calculate the object recognition rate based on the number of recognized objects and the number of classified objects included in the object recognition information. For example, the object recognition rate may be calculated based on a value obtained by dividing the number of classified objects by the number of recognized objects. For example, when the number of objects recognized by the object recognition model in the input image is 20, and the object recognition model has completed classification for only 15 of those objects, the object recognition rate may be calculated as 15/20 * 100 = 75%. Herein, a classified object may be an object for which a prediction probability equal to or greater than a predefined prediction probability is calculated for the type/class of the object, and an unclassified object may be an object for which a prediction probability less than the predefined prediction probability is calculated for the type/class of the object. In this case, the object recognition rate may be the number of objects having a prediction probability equal to or greater than the predefined prediction probability / the total number of recognized objects.

Alternatively, the object recognition information may further include factor information indicating a factor which has caused classification failure for some objects among the recognized objects. For example, the object recognition model may have predicted the existence of a specific object but failed to classify the type/class of the specific object due to a brightness, an object density, the color of the object similar to that of a surrounding environment, an object size, or the moving speed of the object. In this case, the object recognition model may generate cause information for the failure of the classification of specific object and include the cause information in the object recognition information.

Subsequently, the device may transmit an object message to a neighboring device based on the object information recognized from the image, which is included in the object recognition information (S203). As described with reference to FIGS. 16 to 19, the device may select an object that needs to be transmitted to neighboring terminals/devices via a message for V2X services, based on the object recognition information of the object recognition model, and transmit an object message including object information about the selected object to the neighboring terminals/devices. Alternatively, the device may transmit the object information about the selected object to a network or an RSU and request the network or the RSU to transmit an object message including the object information.

Subsequently, the device may determine whether to generate/transmit a control message for controlling the image acquisition device based on an object recognition rate included in the object recognition information (S205). As described with reference to FIGS. 16 to 19, when the object recognition rate is less than (or equal to or less than) a predefined threshold recognition rate, the device may generate at least one control parameter for controlling the image acquisition device and transfer/transmit a control message including the generated at least one control parameter to the image acquisition device.

Specifically, when the object recognition rate is less than the predefined threshold recognition rate, the device may generate the control parameters based on the cause information included in the object recognition information, as described above. For example, the device may generate at least one control parameter for adjusting a tone mapping function, a gamma function, a frame rate, a resolution, division into at least two ROIs, a contrast ratio, a shutter speed, or an OETF, to resolve the object recognition failure factor indicated by the cause information. For example, the device may generate at least one control parameter based on the values defined in Tables 5 to 7 to control parameters for image acquisition of the image acquisition device. Through this, the device may pre-adjust/change image characteristics to be acquired by the image acquisition device based on the cause information, so as to increase the object recognition rate of the object recognition model. When the object recognition rate is equal to or greater than the predefined threshold recognition rate, the device may not generate a control parameter for controlling the image acquisition device.

Alternatively, based on the object recognition information further including unclassified object information for an object with mobility less than a specific threshold among the recognized objects, the device may transmit the control message even if the object recognition rate is equal to or greater than the predefined threshold. For example, the object recognition model may recognize an object with mobility less than the specific threshold for a specific time (or an object that hardly moves for the specific time) on a road. The object recognition model may fail to classify the type and class of the recognized object due to the size, color, or shape of the recognized object (e.g., a road obstacle such as a sinkhole with a color similar to that of the road). In this case, the object recognition model may further include information about an unclassified object with mobility less than the specific threshold in the object recognition information. When the object recognition information further includes the information about the unclassified object, the device may transmit a control message to the image acquisition device even if the object recognition rate of the object recognition model is equal to or greater than the predefined threshold. Herein, the control message may carry a control parameter including the number of ROIs to be divided for the image and information about the ID of an ROI where the unclassified object is located, to the image acquisition device (or the image post-processing module of the image acquisition device), as illustrated in FIG. 19. In this case, the image acquisition device may divide the acquired image into a plurality of ROIs based on the control parameter and transmit a (magnified) divided image corresponding to the ROI with the ROI ID to the object recognition model. In this case, the object recognition model may intensively perform object recognition only for the specific ROI, thereby effectively predicting object characteristics of the unclassified object compared to performing object recognition over the entire image.

Alternatively, the device may transmit a control message to the image acquisition device to control the image acquisition device to drop at least one of images it transmits to the object recognition model. For example, when the object recognition information includes object information for fewer objects than a preset threshold number the device may transmit the control message. In this case, when an image acquired based on the control message has a pixel value difference from a previous image, which is less than a preset threshold difference, the image acquisition device may drop the acquired image without transmitting it to the object recognition model. Subsequently, when the object recognition information includes object information for a number of objects equal to or greater than a preset threshold number, the device may transmit a control message to the image acquisition device to release the dropping of the at least one image. The preset threshold difference may be determined based on the number of objects included in the object recognition information and transmitted through the control message.

In this way, the proposed disclosure may adjust the characteristics of an acquired image itself through direct control of the image acquisition device based on a factor that reduces the object recognition rate of an artificial neural network model. Alternatively, the proposed disclosure may effectively improve the object recognition rate in an image through adjustment of acquired image characteristics based on a road environment or a road condition. Further, when it is determined that real-time object recognition in all images is unnecessary, the proposed disclosure may effectively reduce the processing load and power consumption of object recognition by allowing the image acquisition device to drop an image with a pixel value difference between images, which is less than a specific threshold, without transmitting it to the object recognition model.

FIG. 21 is a diagram illustrating a method for receiving a control message from a device by an image acquisition device.

Referring to FIG. 21, the image acquisition device may acquire an image of a specific geographical area (S211). The image acquisition device may be a CCTV or camera fixedly installed to capture the specific geographical area. The image acquisition device may include the image capturing module and/or the image post-processing module described with reference to FIGS. 16 to 20.

Subsequently, the image acquisition device may transfer/transmit the image to an artificial neural network-based object recognition model trained to recognize an object from the image (S213). The image acquisition device may transmit the acquired image or video to the object recognition model according to a preset periodicity.

Subsequently, the image acquisition device may receive, from a first device, a control message including at least one control parameter that instructs a change in a parameter related to the acquisition of the image (S215). As described with reference to FIGS. 16 to 20, based on an object recognition rate included in object recognition information of the object recognition model being less than a preset threshold, the transmission of the control message may be triggered and the control message may be received from the first device. In this case, the image acquisition device may adjust the parameters of a contrast ratio, a tone mapping function, a gamma function, image division, a frame rate, a shutter speed, an OETF function, and so on related to image acquisition, according to the at least one parameter included in the control message, and characteristics of the image may be changed according to the adjustment of the parameters. For example, the image acquisition device may change/adjust the parameters related to image acquisition according to the control message included in the control message, based on the aforementioned Tables 5 to 7.

Alternatively, the image acquisition device may determine whether to drop the acquired image under the control of the first device. For example, when the first device transmits a control message related to dropping some images, the image acquisition device may drop a current acquired image without transmitting it to the object recognition model if the difference between pixel values of the current acquired image and the immediately preceding acquired image is less than a preset threshold difference (or a threshold difference transmitted in the control message).

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

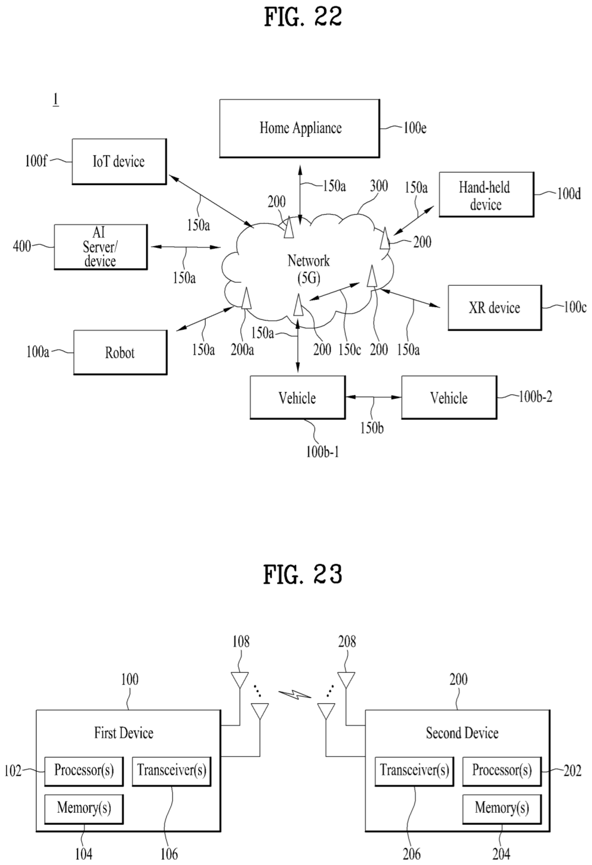

FIG. 22 illustrates a communication system applied to the present disclosure.

Referring to FIG. 22, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 23 illustrates a wireless device applicable to the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or device 100 may include the processor 102 connected to the transceiver 106, and the memory 104. The memory 104 may include at least one program for performing operations related to the embodiments described with reference to FIGS. 16 to 21.

The processor 102 may control the transceiver 106 to acquire object recognition information from an artificial neural network-based object recognition model that recognizes an object from an image of an image acquisition device, transmit an object message to a neighboring device based on object information recognized from the image, which is included in the object recognition information, and determine whether to transmit a control message for controlling the image acquisition device, based on an object recognition rate for the image, which is included in the object recognition information.

Alternatively, a processing device including the processor 102 that controls a device for transmitting a control message, and the memory 104 may be configured. In this case, the processing device may include at least one processor, and at least one memory connected to the at least one processor and storing instructions which, when executed by the at least one processor, cause the device to acquire object recognition information from an artificial neural network-based object recognition model that recognizes an object from an image of an image acquisition device, transmit an object message to a neighboring device based on object information recognized from the image, which is included in the object recognition information, and determine whether to transmit the control message for controlling the image acquisition device, based on an object recognition rate for the image, which is included in the object recognition information.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or image acquisition device 200 may include the transceiver or RF transceiver 206, an image sensor (not shown), the processor 202, and the memory 204. The memory 204 may include at least one program for performing operations related to the embodiments described with reference to FIGS. 16 to 21.

The processor 202 may control the image sensor to acquire an image of a specific geographic area, and control the transceiver 206 to transmit the image to an artificial neural network-based object recognition model trained to recognize an object from the image and to receive, from a first device, a control message including at least one control parameter instructing a change in a parameter associated with the acquisition of the image. Based on an object recognition rate included in object recognition information of the object recognition model being less than a preset threshold, the control message may be received from the first device.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

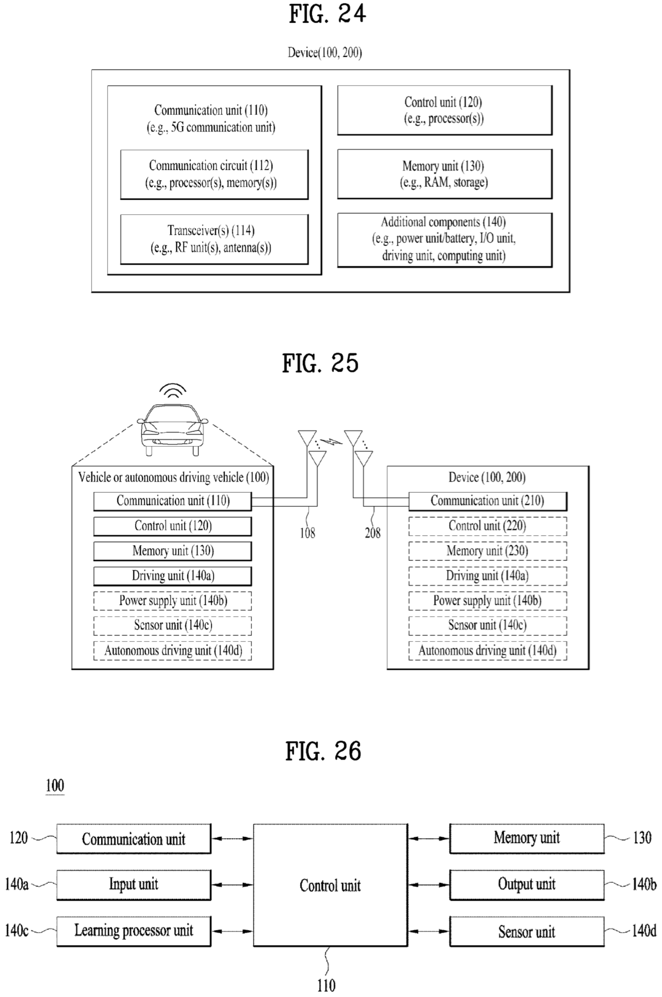

FIG. 24 illustrates another example of a wireless device applied to the present disclosure. The wireless device may be implemented in various forms according to a use-case/service (refer to FIG. 22)

Referring to FIG. 24, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 25 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 25, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultra-acoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 26 illustrates an example of an AI device applicable to the present disclosure.

The AI device may be implemented as a stationary or mobile device such as a TV, projector, smartphone, PC, laptop, digital broadcasting terminal, tablet PC, wearable device, set-top box (STB), radio, washing machine, refrigerator, digital signage, robot, vehicle, and the like.

Referring to FIG. 26, the AI device (100) may include a communication unit (110), a control unit (120), a memory unit (130), input/output units (140a/140b), a learning processor unit (140c), and a sensor unit (140d). Blocks 110 to 130 / 140a to 140d respectively correspond to blocks 110 to 130 / 140 of FIG. 23.

The communication unit (110) may transmit and receive wired/wireless signals (e.g., sensor information, user input, learning model, control signal, etc.) to/from other AI devices (e.g., FIG. 22, 100x, 200, 400) or external devices such as an AI server (200) using wired/wireless communication technologies. To this end, the communication unit (110) may transmit information in the memory unit (130) to external devices or deliver signals received from external devices to the memory unit (130).

The control unit (120) may determine at least one executable operation of the AI device (100) based on information determined or generated using data analysis algorithms or machine learning algorithms. The control unit (120) may control components of the AI device (100) to perform the determined operation. For example, the control unit (120) may request, retrieve, receive, or utilize data from the learning processor unit (140c) or the memory unit (130), and control components of the AI device (100) to execute a predicted operation or a desirable operation among the at least one executable operation. The control unit (120) may also collect history information including operation details of the AI device (100) or user feedback on the operation, and store the information in the memory unit (130) or the learning processor unit (140c), or transmit it to external devices such as an AI server (e.g., FIG. 18, 400). The collected history information may be used to update the learning model.

The memory unit (130) may store data supporting various functions of the AI device (100). For example, the memory unit (130) may store data obtained from the input unit (140a), data obtained from the communication unit (110), output data from the learning processor unit (140c), and data obtained from the sensing unit (140). Additionally, the memory unit (130) may store control information and/or software code required for operation/execution of the control unit (120).

The input unit (140a) may acquire various types of data from outside the AI device (100). For example, the input unit (140a) may acquire training data for model training and input data to which the trained model is to be applied. The input unit (140a) may include a camera, microphone, and/or user input unit. The output unit (140b) may generate outputs related to vision, hearing, or touch. The output unit (140b) may include a display unit, speaker, and/or haptic module. The sensing unit (140) may acquire at least one of internal information of the AI device (100), surrounding environmental information of the AI device (100), and user information using various sensors. The sensing unit (140) may include a proximity sensor, illuminance sensor, acceleration sensor, magnetic sensor, gyro sensor, inertial sensor, RGB sensor, IR sensor, fingerprint recognition sensor, ultrasonic sensor, optical sensor, microphone, and/or radar.

The learning processor unit (140c) may train a model composed of an artificial neural network using training data. The learning processor unit (140c) may perform AI processing together with the learning processor unit of the AI server (e.g., FIG. 18, 400). The learning processor unit (140c) may process information received from external devices via the communication unit (110) and/or information stored in the memory unit (130). The output value of the learning processor unit (140c) may be transmitted to external devices via the communication unit (110) and/or stored in the memory unit (130).

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### INDUSTRIAL APPLICABILITY

The above-described embodiments of the present disclosure are applicable to various mobile communication systems.

## Claims

1. A method for transmitting a control message by a device in a wireless communication system, the method comprising:
acquiring object recognition information from an artificial neural network-based object recognition model that recognizes and classifies an object from an image of an image acquisition device;
transmitting an object message to a neighboring device based on object information recognized from the image, which is included in the object recognition information; and
determining whether to transmit the control message for controlling the image acquisition device, based on an object recognition rate for the image, which is included in the object recognition information.

2. The method of claim 1, wherein based on the object recognition rate being less than a preset threshold, the control message is transmitted.

3. The method of claim 1, wherein the object recognition information further includes factor information about a cause for the object recognition model failing to classify at least one object from the image, and
wherein the at least one control parameter is determined based on the factor information.

4. The method of claim 3, wherein the factor information includes information about at least one of object classification failure due to an illumination state, object classification failure due to an object density, object classification failure due to an object size, or object classification failure due to a moving speed of an object.

5. The method of claim 2, wherein based on the object recognition information further including unclassified object information about an object having mobility less than a specific threshold, the control message is transmitted even if the object recognition rate is greater than or equal to the preset threshold.

6. The method of claim 5, wherein the control message includes a control parameter specifying a partial area to which the object corresponding to the unclassified object information belongs in the image.

7. The method of claim 1, wherein based on a difference between pixel values of acquired images, the image acquisition device does not transmit at least one of the images to the object recognition model.

8. The method of claim 1, wherein the object recognition rate is calculated based on a value obtained by dividing the number of objects whose types are classified among objects recognized by the object recognition module from the image by the number of the recognized objects.

9. A computer-readable recording medium having recorded thereon a program for performing the method of claim 1.

10. A device for transmitting a control message in a wireless communication system, the device comprising:
a radio frequency (RF) transceiver; and
a processor connected to the RF transceiver,
wherein the processor controls the RF transceiver to acquire object recognition information from an artificial neural network-based object recognition model that recognizes and classifies an object from an image of an image acquisition device, transmit an object message to a neighboring device based on object information recognized from the image, which is included in the object recognition information, and determine whether to transmit the control message for controlling the image acquisition device, based on an object recognition rate for the image, which is included in the object recognition information.

11. A processing device for controlling a device for transmitting a control message in a wireless communication system, the processing device comprising:
at least one processor; and
at least one memory connected to the at least one processor and storing instructions which, when executed by the at least one processor, cause the device to:
acquire object recognition information from an artificial neural network-based object recognition model that recognizes and classifies an object from an image of an image acquisition device;
transmit an object message to a neighboring device based on object information recognized from the image, which is included in the object recognition information; and
determine whether to transmit the control message for controlling the image acquisition device, based on an object recognition rate for the image, which is included in the object recognition information.

12. A method for receiving a control message by an image acquisition device in a wireless communication system, the method comprising:
acquiring an image of a specific geographic area;
transmitting the image to an artificial neural network-based object recognition model trained to recognize and classify an object from the image; and
receiving, from a first device, a control message including at least one control parameter instructing a change in a parameter associated with the acquisition of the image,
wherein based on an object recognition rate included in object recognition information of the object recognition model being less than a preset threshold, the control message is received from the first device.

13. A computer-readable recording medium recording having recorded thereon a program for performing the method of claim 12.

14. An image acquisition device for receiving a control message in a wireless communication system, comprising:
an image sensor for acquiring an image;
a radio frequency (RF) transceiver; and
a processor connected to the RF transceiver and the image sensor,
wherein the processor controls the image sensor to acquire an image of a specific geographic area, and controls the RF transceiver to transmit the image to an artificial neural network-based object recognition model trained to recognize and classify an object from the image and to receive, from a first device, a control message including at least one control parameter instructing a change in a parameter associated with the acquisition of the image, and
wherein based on an object recognition rate included in object recognition information of the object recognition model being less than a preset threshold, the control message is received from the first device.

15. A processing device for controlling an image acquisition device for receiving a control message in a wireless communication system, the processing device comprising:
at least one processor; and
at least one memory connected to the at least one processor and storing instructions which, when executed by the at least one processor, cause the image acquisition device to:
acquire an image of a specific geographic area;
transmit the image to an artificial neural network-based object recognition model trained to recognize and classify an object from the image; and
receive, from a first device, a control message including at least one control parameter instructing a change in a parameter associated with the acquisition of the image,
wherein based on an object recognition rate included in object recognition information of the object recognition model being less than a preset threshold, the control message is received from the first device.
